# FASCICULE DE BREVET EUROPEEN

(11) **EP 3 534 548 B1**
(45) Date de publication et mention de la délivrance du brevet: **15.04.2020**
(21) Numéro de dépôt: 19158231.1
(22) Date de dépôt: 20.02.2019
(51) Int. Cl.: H04B 7/185

(54) **SYSTEME D'ASSISTANCE A DISTANCE POUR AERONEF**
FERNASSISTENZSYSTEM FÜR LUFTFAHRZEUG
REMOTE ASSISTANCE SYSTEM FOR AIRCRAFT

(30) Priorité: 02.03.2018 FR 1851830
(43) Date de publication de la demande: 04.09.2019
(73) Titulaire: Airbus Operations S.A.S., 31060 Toulouse (FR)
(72) Inventeur: COTDELOUP, Fabrice, 31830 PLAISANCE DU TOUCH (FR); PICHAVANT, Claude, 31100 TOULOUSE (FR); EMBERGER, Luc, 31450 CORRONSAC (FR)
(74) Mandataire: Gicquel, Olivier Yves Gérard

(56) Documents cités:
- US-A1- 2003 130 770
- US-A1- 2004 128 039
- US-A1- 2013 346 081
- US-B2- 9 401 758

## Description

Le domaine de la présente invention est l'assistance à distance pour aéronef et concerne plus particulièrement un système d'assistance à distance pour aéronef.

Actuellement dans un cockpit d'aéronef, des tâches de gestion de communication avec des centres de contrôle du trafic aérien (ATC) et/ou avec d'autres aéronefs sont gérées par un membre d'équipage. Pour cela plusieurs moyens de communications sont en général disponibles à bord :
- Au moins deux radio VHF ("Very High Frequencies" en langue anglo-saxonne), qui sont utilisées pour des communications "voix" et/ou "données" sur de courtes distances (de l'ordre de 370 kilomètres, soit 200 nautiques) en mode diffusion large ("broadcasting" en langue anglo-saxonne). Trois radios VHF sont usuellement installées à bord ;
- Au moins une radio HF ("High Frequencies" en langue anglo-saxonne), qui est utilisée pour des communications "voix" et/ou "données" sur de plus longues distances en mode diffusion large ; et
- Une liaison satellite, appelée SATCOM, qui est utilisée pour des communications "voix" et/ou "données" sur des longues distances en mode point à point.

Ces tâches de gestion de communication consistent à configurer des équipements de communication embarqués dans l'aéronef afin d'écouter une ou plusieurs fréquences ou canaux radio, et de répondre à des sollicitations des centres de contrôle du trafic aérien ATC. Il convient aussi d'ajuster le volume audio de chaque communication "voix" établie. D'autres tâches de configuration d'équipements embarqués dans l'aéronef peuvent être assumées par le membre d'équipage en charge des tâches de gestion de communication.

Dans des conditions où l'équipage est réduit à un seul membre pilote dans le cockpit, ce dernier peut être soumis à une surcharge d'activité. Par exemple, en cas de conditions météorologiques nécessitant une diversion, le pilote est contraint à devoir gérer simultanément le déroutement de l'aéronef, des procédures de vérification, ainsi que les tâches de gestion de communication avec les centres de contrôle du trafic aérien ATC en vue d'obtenir une autorisation de déroutement vers un nouvel aéroport.

On connaît, par la demande de brevet US2003/130770, un équipement embarqué, en communication radio avec le sol, qui permet à des équipes aux sol de prendre le contrôle de l'aéronef afin de soulager le pilote dans certaines tâches, en particulier de pilotage de l'aéronef. La demande de brevet susmentionnée ne traite pas de la gestion des communications de l'aéronef.

Il existe un besoin de trouver une solution qui permette de soulager les tâches de gestion de communication réalisées dans le cockpit, plus particulièrement lorsque l'équipage est réduit à un seul membre pilote dans le cockpit.

L'invention vise à répondre en tout ou partie à ce besoin et concerne, à cet effet, un équipement destiné à être embarqué dans un aéronef tel que revendiqué dans la revendication 1.

Ainsi, un opérateur posté dans le centre d'assistance à distance entend, grâce au mixage des signaux audio, les échanges entre le pilote et le centre de contrôle de trafic aérien, peut échanger avec le pilote et le délester de certaines tâches grâce aux commandes à distance.

Les caractéristiques de l'invention mentionnées ci-dessus, ainsi que d'autres, apparaîtront plus clairement à la lecture de la description suivante d'au moins un exemple de réalisation, ladite description étant faite en relation avec les dessins joints, parmi lesquels :
- la Fig. 1 illustre schématiquement un système de communication entre un aéronef et des sites au sol ;
- la Fig. 2 illustre schématiquement un premier équipement d'assistance à distance embarqué dans l'aéronef ;
- la Fig. 3 illustre schématiquement un second équipement d'assistance à distance installé dans un site au sol ;
- la Fig. 4 illustre schématiquement un exemple d'architecture matérielle du premier équipement d'assistance à distance embarqué dans l'aéronef, dans un mode de réalisation particulier ;
- la Fig. 5 illustre schématiquement un exemple d'architecture modulaire du premier équipement d'assistance à distance embarqué dans l'aéronef, dans un mode de réalisation particulier ;
- la Fig. 6 illustre schématiquement un exemple d'architecture modulaire du second équipement d'assistance à distance installé dans un site au sol, dans un mode de réalisation particulier ; et
- la Fig. 7 illustre schématiquement un organigramme d'un algorithme implémenté par le premier équipement d'assistance à distance embarqué dans l'aéronef.

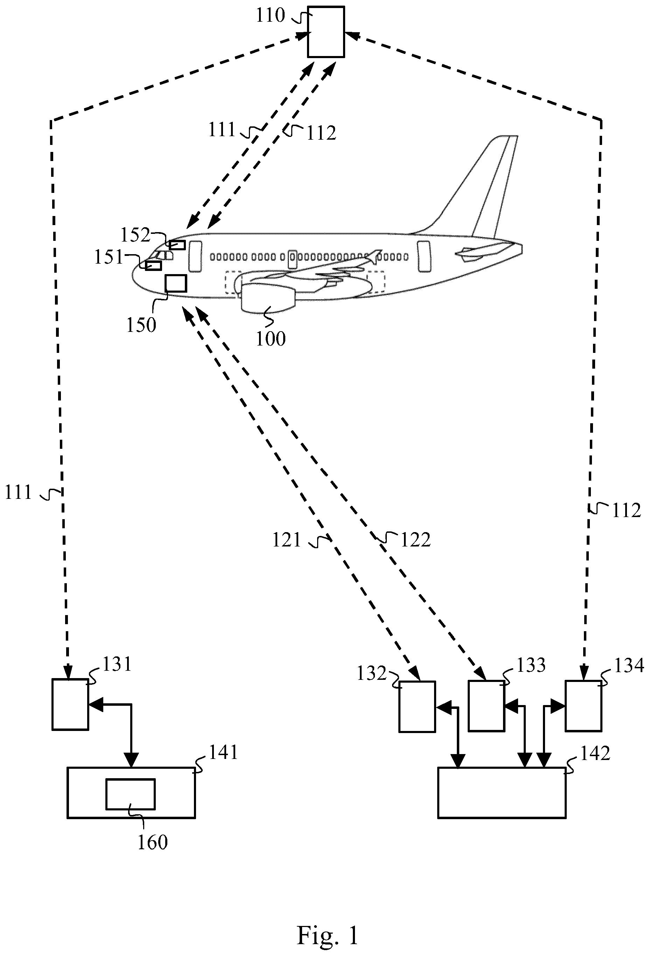

La **Fig. 1** illustre schématiquement un système de communication entre un aéronef 100 et des sites au sol 141, 142. Le site 142 est un centre de contrôle du trafic aérien ATC et le site 141 est un centre d'assistance à distance. De manière connue, l'aéronef 100 comprend des moyens embarqués pour établir des communications avec les sites au sol 141, 142.

Le centre de contrôle du trafic aérien ATC 142 est équipé de, ou connecté à, au moins un émetteur-récepteur ("transceiver" en langue anglo-saxonne) adapté pour établir respectivement au moins une communication avec l'aéronef 100. Sur la Fig. 1, le centre de contrôle du trafic aérien ATC 142 est connecté à trois émetteurs-récepteurs 132, 133, 134. Par exemple, l'émetteur-récepteur 132 est adapté pour effectuer des communications radio VHF 121, l'émetteur-récepteur 133 est adapté pour effectuer des communications radio HF 122 et l'émetteur-récepteur 134 est adapté pour effectuer des communications satellite 112 via un satellite 110. D'autres technologies de communication peuvent être utilisées pour établir une communication entre le centre de contrôle du trafic aérien ATC 142 et l'aéronef 100.

Le centre d'assistance à distance 141 est équipé de moyens de communication adaptés pour établir une communication 111 avec l'aéronef 100. Ces moyens de communications sont au moins un émetteur-récepteur adapté pour établir la communication 111 avec l'aéronef 100, ou une interface de communication connectée audit au moins un émetteur-récepteur. Le centre d'assistance à distance 141 est préférentiellement connecté, via un réseau IP ("Internet Protocol" en langue anglo-saxonne, tel que décrit dans le document normatif RFC 791), à un émetteur-récepteur satellite 131 adapté pour effectuer des communications satellite via le satellite 110 (ou un autre satellite). Cela permet de s'abstraire de la position au sol du centre d'assistance à distance 141 par rapport à la position effective de l'aéronef 100. D'autres technologies de communication peuvent être utilisées pour établir une communication entre le centre d'assistance à distance 141 et l'aéronef 100 et notamment tous moyens de communication longue distance supportant le protocole de communication IP.

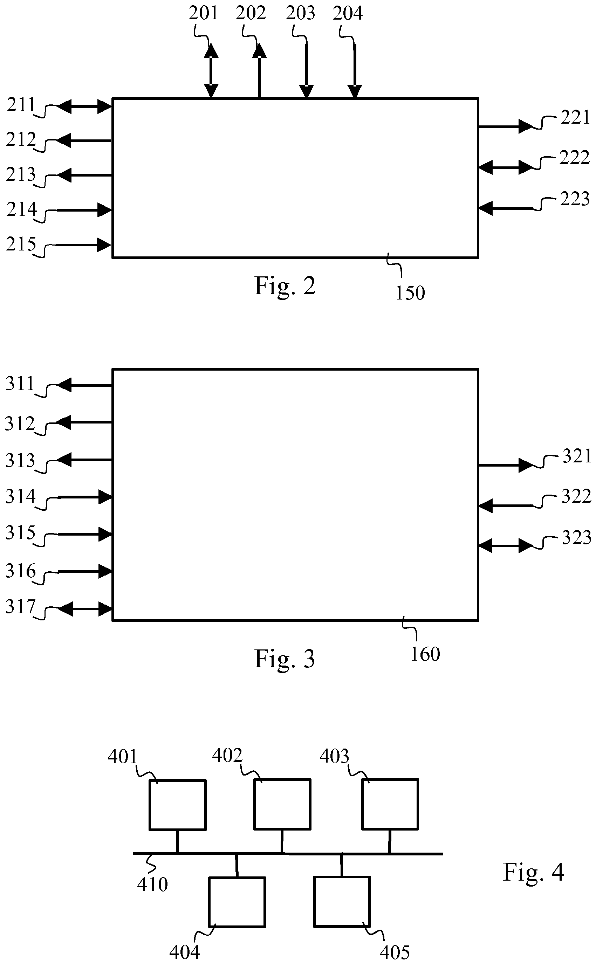

De plus, l'aéronef 100 embarque un premier équipement d'assistance à distance 150 et le centre d'assistance à distance 141 comporte un second équipement d'assistance à distance 160, qui coopèrent de sorte à permettre à un opérateur posté dans le centre d'assistance à distance 141 d'assister le pilote de l'aéronef 100 et plus particulièrement de commander à distance des équipements de l'aéronef 100. Cet aspect est détaillé par la suite en relation avec les Figs. 2, 3 et 7.

La **Fig. 2** illustre schématiquement le premier équipement d'assistance à distance 150. Considérons à titre illustratif que le pilote de l'aéronef 100 communique avec le centre de contrôle du trafic aérien ATC 142 via la communication 112.

Le premier équipement d'assistance à distance 150 comporte une interface d'entrée-sortie 211 pour recevoir des signaux audio, typiquement des signaux voix, en provenance de la communication 112. Lorsque plusieurs communications sont actives simultanément avec le centre de contrôle du trafic aérien ATC 142, les signaux audio issus de ces communications sont mixés ensemble par un équipement dédié du cockpit puis fournis via l'interface d'entrée-sortie 211.

De plus, le premier équipement d'assistance à distance 150 est agencé pour transmettre via l'interface d'entrée-sortie 211 des signaux audio reçus d'un microphone 151 équipant le cockpit. Le microphone 151 est destiné plus particulièrement à l'usage du pilote, et il peut s'agir d'un microphone fixé à une cloison du cockpit, ou d'un microphone arrangé sur un support destiné à être porté par le pilote ou intégré dans un masque à oxygène destiné au pilote. Le premier équipement d'assistance à distance 150 comporte une interface d'entrée-sortie 201 pour recevoir ces signaux audio issus dudit microphone 151. De plus, le premier équipement d'assistance à distance 150 comporte une interface d'entrée-sortie 222 pour recevoir des signaux audio, typiquement des signaux voix, en provenance de la communication 111 (et donc du centre d'assistance à distance 141).

Le premier équipement d'assistance à distance 150 comporte des moyens de premier mixage. Ces moyens de premier mixage sont constitués d'un premier mixeur configuré pour effectuer un premier mixage, et ainsi superposer, les signaux audio en provenance de l'interface d'entrée-sortie 211 et les signaux audio en provenance de l'interface d'entrée-sortie 222. Le premier équipement d'assistance à distance 150 est ainsi agencé pour fournir via l'interface d'entrée-sortie 201 le résultat du premier mixage. Ainsi, grâce à un ou plusieurs haut-parleurs 152 arrangés dans le cockpit, le pilote de l'aéronef 100 entend les communications voix qui lui sont adressées par l'opérateur posté dans le centre d'assistance à distance 141 et par le centre de contrôle du trafic aérien ATC 142. Il peut s'agir ici de haut-parleurs à diffusion générale qui sont montés sur une cloison ou le plafond du cockpit.

Le premier équipement d'assistance à distance 150 comporte aussi des moyens de second mixage. Ces moyens de second mixage sont constitués d'un second mixeur configuré pour effectuer un second mixage, et ainsi superposer, les signaux audio en provenance de l'interface d'entrée-sortie 211 et les signaux audio en provenance de l'interface d'entrée-sortie 201. Le premier équipement d'assistance à distance 150 est ainsi agencé pour fournir via l'interface d'entrée-sortie 222 le résultat du second mixage. Ainsi, l'opérateur posté dans le centre d'assistance à distance 141 reçoit les communications voix qui lui sont adressées par le pilote de l'aéronef 100, ainsi que les communications voix entre le pilote de l'aéronef 100 et le centre de contrôle du trafic aérien ATC 142.

Le premier équipement d'assistance à distance 150 comporte aussi une interface d'entrée 223 pour recevoir des données, et notamment des commandes, en provenance de la communication 111. Le premier équipement d'assistance à distance 150 comporte aussi une interface de sortie 212 via laquelle relayer les commandes reçues via l'interface d'entrée 223. Le premier équipement d'assistance à distance 150 comporte ainsi des moyens de relais de commandes, par exemple des aiguilleurs ou des commutateurs matériels ou logiciels, pour relayer les commandes reçues via la communication 111 vers des équipements de l'aéronef 100. Ainsi, l'opérateur posté dans le centre d'assistance à distance 141 peut commander (par exemple configurer) à distance des équipements de l'aéronef 100. La teneur des commandes en question est adressée ci-après en relation avec la Fig. 3.

Le premier équipement d'assistance à distance 150 comporte aussi préférentiellement une interface de sortie 221 pour transmettre des données via la communication 111. Le premier équipement d'assistance à distance 150 comporte alors en outre une interface d'entrée 215 pour recevoir ces données en provenance d'équipements du cockpit, et sont par exemple des informations d'état et de configuration d'équipements de l'aéronef 100 et/ou des messages textuels (e.g. de type CPDLC ("Controller Pilot Data Link Communications" en langue anglo-saxonne)) échangés entre le cockpit de l'aéronef 100 et le centre de contrôle du trafic aérien ATC 142. Le premier équipement d'assistance à distance 150 comporte alors des moyens de relais d'informations, par exemple des aiguilleurs ou des commutateurs matériels ou logiciels, pour relayer ces informations depuis l'interface d'entrée 215 vers l'interface de sortie 221. Ainsi, l'opérateur posté dans le centre d'assistance à distance 141 reçoit ces informations en plus des communications voix.

Le premier équipement d'assistance à distance 150 peut aussi comporter une interface d'entrée 214 pour recevoir un signal d'indication d'appel entrant, en provenance de la communication 112 (ou de toute autre communication établie avec le centre de contrôle du trafic aérien ATC 142). Le premier équipement d'assistance à distance 150 est alors agencé pour relayer ce signal d'indication d'appel entrant vers l'interface de sortie 221. Ce signal d'indication d'appel entrant est présenté à destination du pilote de l'aéronef 100 par un équipement dédié du cockpit, mais peut en variante être relayé au pilote par le premier équipement d'assistance à distance 150 grâce à une interface de sortie dédiée.

Le premier équipement d'assistance à distance 150 peut aussi comporter une interface de sortie 213 pour transmettre un signal de prise de parole PTT ("Push-To-Talk" en langue anglo-saxonne), à destination du centre de contrôle du trafic aérien ATC 142. Ce signal de prise de parole PTT est précédemment reçu via l'interface d'entrée-sortie 222 en provenance de la communication 111 et est ainsi relayé par le premier équipement d'assistance à distance 150.

Le premier équipement d'assistance à distance 150 peut aussi comporter une interface de sortie 202 pour relayer au pilote un signal d'indication d'appel entrant reçu via l'interface d'entrée 223 en provenance de la communication 111 (et donc du centre d'assistance à distance 141).

Le premier équipement d'assistance à distance 150 peut aussi comporter une interface d'entrée 203 pour recevoir un signal de requête de prise de contact avec le centre d'assistance à distance 141. Ce signal de requête de prise de contact émane du pilote de l'aéronef 100 par le biais par exemple d'un bouton dédié. Le premier équipement d'assistance à distance 150 est alors agencé pour relayer ce signal de requête de prise de contact vers l'interface de sortie 221.

Le premier équipement d'assistance à distance 150 peut aussi comporter une interface d'entrée 204 pour recevoir un signal d'activation d'assistance à distance. Ce signal d'activation d'assistance à distance émane du pilote de l'aéronef 100 par le biais par exemple d'un bouton dédié. Ce signal d'activation d'assistance à distance peut en variante être déclenché par un événement prédéfini, comme par exemple la survenue d'une alarme prédéfinie sur un équipement du cockpit. Le premier équipement d'assistance à distance 150 comporte alors des moyens d'activation agencés pour activer au moins les mixages et relais de commandes susmentionnés, sur détection de ce signal d'activation d'assistance à distance. Ces moyens d'activation consistent en un détecteur de présence du signal d'activation d'assistance à distance et un générateur de signal d'activation des moyens de premier mixage, de second mixage et de relais susmentionnés. En l'absence de ce signal d'activation d'assistance à distance, le premier équipement d'assistance à distance 150 comporte des moyens de propagation, par exemple des aiguilleurs ou des commutateurs matériels ou logiciels, agencés pour mettre uniquement en relation les interfaces d'entrées-sorties 201 et 211, de manière à permettre les communications voix entre le cockpit et le centre de contrôle du trafic aérien ATC 142. Toute commande reçue via le centre d'assistance à distance 141 est alors ignorée par le premier équipement d'assistance à distance 150. A noter toutefois que le premier équipement d'assistance à distance 150 maintient préférentiellement le relais, via l'interface de sortie 202, de tout signal d'indication d'appel entrant reçu via l'interface d'entrée 223 en provenance de la communication 111. Cela permet notamment au centre d'assistance à distance 141 de signifier au pilote de l'aéronef 100 que le centre d'assistance à distance 141 souhaite que l'assistance à distance soit activée.

La Fig. 3 illustre schématiquement le second équipement d'assistance à distance 160 installé dans le centre d'assistance à distance 141. Le second équipement d'assistance à distance 160 est un équipement de mise en forme de signaux.

Le second équipement d'assistance à distance 160 comporte une interface d'entrée-sortie 317 pour recevoir des signaux audio en provenance d'un microphone équipant le centre d'assistance à distance 141 (équipant plus particulièrement l'opérateur qui y est posté). Le second équipement d'assistance à distance 160 comporte en outre une interface d'entrée-sortie 323 pour relayer ces signaux audio à destination du cockpit de l'aéronef 100 via la communication 111. De plus, le second équipement d'assistance à distance 160 est agencé pour recevoir via l'interface d'entrée-sortie 323 des signaux audio en provenance de l'aéronef 100 via la communication 111, et pour les relayer via l'interface d'entrée-sortie 317.

Le second équipement d'assistance à distance 160 comporte en outre une interface d'entrée 315 pour recevoir des données, et notamment des commandes, en provenance d'un organe de contrôle dans le centre d'assistance à distance 141. Grâce à une interface utilisateur de cet organe de contrôle, l'opérateur posté dans le centre d'assistance à distance 141 définit des commandes à transmettre au cockpit de l'aéronef 100. Le second équipement d'assistance à distance 160 comporte en outre une interface de sortie 321, et est adapté pour relayer ces données et commandes à l'aéronef 100 par la communication 111 via ladite interface de sortie 321.

Dans un mode de réalisation particulier, de telles commandes concernent des paramètres d'établissement et de gestion de communication entre l'aéronef 100 et le centre de contrôle du trafic aérien ATC 142. Par exemple, ces commandes sont parmi les suivantes :
- ajuster le niveau sonore des signaux audio reçus en provenance du centre de contrôle du trafic aérien ATC 142;
- paramétrer des équipements du cockpit pour établir une ou plusieurs communications avec le centre de contrôle du trafic aérien ATC 142 (fréquence porteuse, canaux de communication, numéro d'appel,...) ;
- paramétrer des équipements du cockpit pour sélectionner en émission et/ou en réception une ou plusieurs communications parmi une pluralité de communications établies avec le centre de contrôle du trafic aérien ATC 142 ;
- accepter un appel reçu via une communication établie avec le centre de contrôle du trafic aérien ATC 142.

De telles commandes peuvent aussi préférentiellement permettre d'ajuster, pour le pilote, le niveau sonore des signaux audio reçus en provenance du centre d'assistance à distance 141.

Dans un mode de réalisation particulier, ces commandes peuvent concerner d'autres équipements de l'aéronef 100. Par ce biais, l'opérateur posté dans le centre d'assistance à distance 141 peut par exemple commander l'ouverture et la fermeture de la porte entre le cockpit et la cabine de l'aéronef 100. D'autres équipements de l'aéronef 100 peuvent être commandés selon le même principe.

Le second équipement d'assistance à distance 160 comporte aussi préférentiellement une interface de sortie 313 pour transmettre des données à destination de l'organe de contrôle dans le centre d'assistance à distance 141. Le second équipement d'assistance à distance 160 comporte alors une interface d'entrée 322 pour recevoir ces données en provenance de l'aéronef 100 via la communication 111. De telles données sont par exemple des informations d'état et de configuration d'équipements de l'aéronef 100 et/ou des messages textuels (*e.g*. de type CPDLC) échangés entre le cockpit de l'aéronef 100 et le centre de contrôle du trafic aérien ATC 142. Ainsi, l'opérateur posté dans le centre d'assistance à distance 141 peut bénéficier de ces informations, par exemple affichées sur l'interface utilisateur dudit organe de contrôle, en plus des communications voix entre l'aéronef 100 et le centre de contrôle du trafic aérien ATC 142.

Le second équipement d'assistance à distance 160 peut aussi comporter une interface de sortie 311 pour transmettre un signal d'indication d'appel entrant. Ce signal d'indication d'appel entrant émane du pilote de l'aéronef 100 et est reçu via la communication 111 via l'interface d'entrée 322, et est ainsi relayé par le second équipement d'assistance à distance 160 via l'interface de sortie 311 vers l'organe de contrôle dans le centre d'assistance à distance 141.

Le second équipement d'assistance à distance 160 peut aussi comporter une interface de sortie 312 pour transmettre un autre signal d'indication d'appel entrant. Cet autre signal d'indication d'appel entrant émane du centre de contrôle du trafic aérien ATC 142 et est reçu, grâce au relais effectué par le premier équipement d'assistance à distance 150, via la communication 111 par l'interface d'entrée 322.

Le second équipement d'assistance à distance 160 peut aussi comporter une interface d'entrée 314 pour recevoir un signal d'indication d'appel entrant. Ce signal d'indication d'appel entrant est reçu en provenance de l'organe de contrôle dans le centre d'assistance à distance 141. Le second équipement d'assistance à distance 160 est alors agencé pour relayer ce signal d'indication d'appel entrant via l'interface de sortie 321 à destination de l'aéronef 100 via la communication 111.

Le second équipement d'assistance à distance 160 peut aussi comporter une interface d'entrée 316 pour recevoir un signal de prise de parole PTT en provenance de l'organe de contrôle dans le centre d'assistance à distance 141. Le second équipement d'assistance à distance 160 est alors agencé pour relayer ce signal de prise de parole PTT vers la communication 111 via l'interface d'entrée-sortie 323. Ainsi, le second équipement d'assistance à distance 160 est agencé pour insérer ce signal de prise de parole PTT au sein des signaux audio relayés depuis l'interface d'entrée-sortie 317 vers l'interface d'entrée-sortie 323. Cela permet d'assurer que, en réception, l'interprétation de ce signal puisse être effectuée de manière synchrone avec lesdits signaux audio.

La **Fig. 4** illustre schématiquement un exemple d'architecture matérielle du premier équipement d'assistance à distance 150 embarqué dans l'aéronef 100, dans un mode de réalisation particulier.

Le premier équipement d'assistance à distance 150 comporte ainsi, reliés par un bus de communication 410 : un processeur CPU ("Central Processing Unit" en langue anglo-saxonne) 401 ; une mémoire vive RAM ("Random Access Memory" en langue anglo-saxonne) 402 ; une mémoire morte ROM ("Read Only Memory" en langue anglo-saxonne) 403, ou une mémoire Flash ; une unité de stockage 404, telle qu'un disque dur HDD ("Hard Disk Drive" en langue anglo-saxonne), ou un lecteur de support de stockage, tel qu'un lecteur de cartes SD ("Secure Digital" en langue anglo-saxonne) ; un ensemble d'entrées-sorties 405 tel que précédemment décrit en relation avec la Fig. 2.

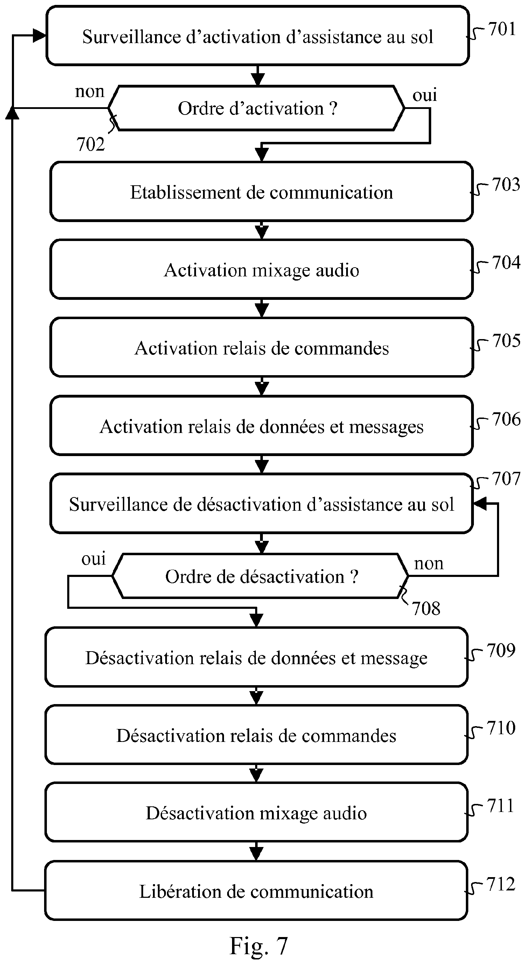

Le processeur CPU 401 est capable d'exécuter des instructions chargées dans la mémoire RAM 402 à partir de la mémoire ROM 403 ou de la mémoire Flash, ou d'une mémoire externe, ou d'un support de stockage (tel qu'une carte SD), ou d'un réseau de communication. Lorsque le premier équipement d'assistance à distance 150 est mis sous tension, le processeur CPU 401 est capable de lire de la mémoire RAM 402 des instructions et de les exécuter. Ces instructions forment un programme d'ordinateur causant l'implémentation, par le processeur CPU 401, de tout ou partie de l'algorithme et des étapes décrits ci-après en relation avec la Fig. 7.

Tout ou partie de l'algorithme et des étapes décrits ci-après en relation avec la Fig. 7 peut ainsi être implémenté sous forme logicielle par exécution d'un ensemble d'instructions par une machine programmable, par exemple un DSP ("Digital Signal Processor" en langue anglo-saxonne) ou un microcontrôleur, ou être implémenté sous forme matérielle par une machine ou un composant dédié, par exemple un composant FPGA ("Field-Programmable Gate Array" en langue anglo-saxonne) ou ASIC ("Application-Specific Integrated Circuit" en langue anglo-saxonne). D'une manière générale, le premier équipement d'assistance à distance 150 comporte de la circuiterie électronique adaptée pour implémenter, sous forme logicielle et/ou matérielle, l'algorithme et les étapes décrits ci-après en relation avec la Fig. 7.

Il convient de noter que le second équipement d'assistance à distance 160 peut être construit sur une même base d'architecture matérielle.

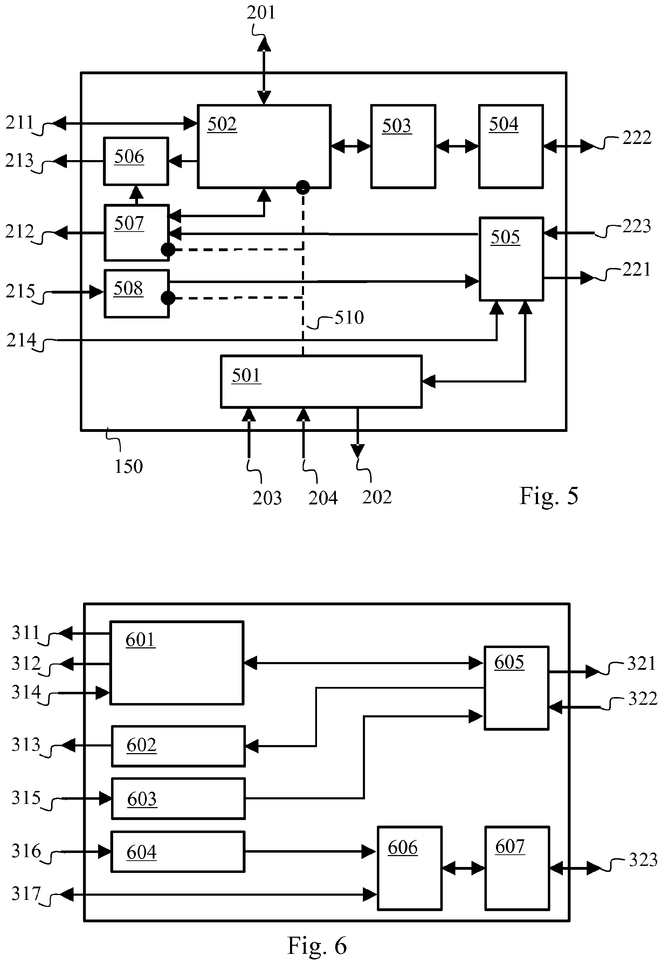

Ainsi, l'exemple d'architecture modulaire présenté ci-dessous en relation avec la Fig. 5, ainsi que l'exemple d'architecture modulaire présenté ci-dessous en relation avec la Fig. 6, peuvent être implémentés sous forme logicielle par exécution d'un ensemble d'instructions par une machine programmable, par exemple un DSP ou un microcontrôleur, ou être implémenté sous forme matérielle par une machine ou un composant dédié, par exemple un composant FPGA ou ASIC. Et plus particulièrement, les moyens de mixage, de relais, d'activation et de propagation susmentionnés peuvent ainsi prendre la forme de modules logiciels ou matériels.

La **Fig. 5** illustre schématiquement un exemple d'architecture modulaire du premier équipement d'assistance à distance 150, dans un mode de réalisation particulier.

Le premier équipement d'assistance à distance 150 comporte alors un module 502 de sélection et de mixage, qui inclut les premier et second mixeurs susmentionnés. Le module 502 de sélection et de mixage mixe les signaux audio issus des interfaces d'entrée-sortie 201, 211 et 222, comme décrit en relation avec la Fig. 2. Les signaux audio peuvent être des signaux numériques. Lorsque les signaux audio échangés par les interfaces d'entrée-sortie 201 et 211 sont des signaux analogiques, le premier équipement d'assistance à distance 150 comporte un module 503 d'encodage et de décodage audio permettant d'effectuer une conversion analogique-numérique afin de pouvoir échanger les signaux audio via la communication 111.

Le premier équipement d'assistance à distance 150 comporte préférentiellement un module 504 de chiffrement et déchiffrement destiné aux signaux audio numériques pour sécuriser leur transmission via la communication 111.

Le premier équipement d'assistance à distance 150 comporte aussi un module 507 de décodage de commandes, connecté à l'interface de sortie 212. Le module 507 de décodage de commandes est configuré pour interpréter chaque commande reçue via la communication 111. Lorsque le premier équipement d'assistance à distance 150 est adapté pour recevoir des commandes en provenance du centre d'assistance à distance 141 de sélection en émission et/ou en réception d'une ou plusieurs communications parmi une pluralité de communications établies avec le centre de contrôle du trafic aérien ATC 142, le module 507 de décodage de commandes est connecté au module 502 de sélection et de mixage afin de faire appliquer les commandes de sélection reçues via la communication 111.

Le premier équipement d'assistance à distance 150 comporte aussi préférentiellement un module 508 de boîte aux lettres ("mailbox" en anglais) connecté à l'interface d'entrée 215. Le module 508 de boîte aux lettres est configuré pour stocker temporairement, avant transmission via la communication 111, des données en provenance d'équipements du cockpit, par exemple des informations d'état et de configuration d'équipements de l'aéronef 100 et/ou des messages textuels (*e.g*. de type CPDLC) échangés entre le cockpit de l'aéronef 100 et le centre de contrôle du trafic aérien ATC 142.

Le premier équipement d'assistance à distance 150 comporte préférentiellement un module 505 de chiffrement et déchiffrement destiné aux données et commandes échangées au travers des interfaces d'entrée 223 et de sortie 221, afin de sécuriser leur transmission via la communication 111.

Le premier équipement d'assistance à distance 150 comporte aussi préférentiellement un module 506 de décodage de prise de parole PTT connecté à l'interface de sortie 213. Le module 506 de décodage de prise de parole PTT est adapté pour délivrer sur l'interface de sortie 213 chaque signal de prise de parole PTT inséré dans les signaux audio reçus via l'interface d'entrée-sortie 222. L'activation et la désactivation de ce module 506 de décodage de prise de parole PTT sont réalisées par le module 507 de décodage de commandes en fonction d'une sélection en émission d'une communication avec le centre de contrôle du trafic aérien ATC 142 qui repose sur une méthode de conversation nécessitant l'appui sur un bouton pour passer d'un mode réception à un mode émission.

Le premier équipement d'assistance à distance 150 comporte aussi préférentiellement un module 501 de gestion d'interfaçage avec le pilote, qui gère l'interface de sortie 202 et les interfaces d'entrée 203 et 204. Lorsqu'aucun signal d'activation d'assistance à distance n'est présent sur l'interface d'entrée 204, le module 501 de gestion d'interfaçage avec le pilote désactive, par le biais d'une ligne d'activation 510, le module 507 de décodage de commandes et le module 508 de boîte aux lettres. De plus, le module 501 de gestion d'interfaçage avec le pilote bascule, grâce à la ligne d'activation 510, le module 502 de sélection et de mixage dans un mode bridé dans lequel seules les interfaces d'entrées-sorties 201 et 211 sont mises en relation. Les premier et second mixeurs susmentionnés sont ainsi désactivés, ainsi que le relais de commandes. L'assistance à distance via la communication 111 est ainsi désactivée, mais les communications voix entre le cockpit et le centre de contrôle du trafic aérien ATC 142 sont maintenues.

La **Fig. 6** illustre schématiquement un exemple d'architecture modulaire du second équipement d'assistance à distance 160, dans un mode de réalisation particulier.

Le second équipement d'assistance à distance 160 comporte alors un module 603 de gestion de commandes, qui gère l'interconnexion de l'interface d'entrée 315 avec la communication 111, à savoir par le biais des interfaces d'entrée 322 et de sortie 321.

Le second équipement d'assistance à distance 160 comporte aussi préférentiellement un module 601 de gestion d'appels, qui gère l'interconnexion de l'interface d'entrée 314 et des interfaces de sortie 311 et 312 avec la communication 111, à savoir par le biais des interfaces d'entrée 322 et de sortie 321.

Le second équipement d'assistance à distance 160 comporte aussi préférentiellement un module 602 de boîte aux lettres configuré pour stocker temporairement, après réception via la communication 111 et avant transmission via l'interface de sortie 313, des données en provenance d'équipements du cockpit, par exemple des informations d'état et de configuration d'équipements de l'aéronef 100 et/ou des messages textuels (*e.g*. de type CPDLC) échangés entre le cockpit de l'aéronef 100 et le centre de contrôle du trafic aérien ATC 142.

Le second équipement d'assistance à distance 160 comporte préférentiellement un module 605 de chiffrement et déchiffrement destiné aux données et commandes échangées au travers des interfaces d'entrée 322 et de sortie 321, afin de sécuriser leur transmission via la communication 111.

Comme déjà indiqué, le second équipement d'assistance à distance 160 assure l'interconnexion entre les interfaces d'entrée-sortie 317 et 323. Les signaux audio peuvent être des signaux numériques. Lorsque les signaux audio échangés par l'interface d'entrée-sortie 317 sont des signaux analogiques, le second équipement d'assistance à distance 160 comporte un module 606 d'encodage et de décodage audio permettant d'effectuer une conversion analogique-numérique afin de pouvoir échanger les signaux audio via la communication 111.

Le second équipement d'assistance à distance 160 comporte aussi préférentiellement un module 607 de chiffrement et déchiffrement destiné aux signaux audio numériques pour sécuriser leur transmission via la communication 111.

Le second équipement d'assistance à distance 160 comporte aussi préférentiellement un module 604 d'encodage de prise de parole PTT connecté à l'interface d'entrée 316. Le second équipement d'assistance à distance 160 est agencé pour insérer la sortie du module 604 d'encodage de prise de parole PTT dans les signaux audio transmis via l'interface d'entrée-sortie 323, par exemple par le biais du module 606 d'encodage et de décodage audio.

La **Fig. 7** illustre schématiquement un organigramme d'un algorithme implémenté par le premier équipement d'assistance à distance 150.

Dans une étape 701, le premier équipement d'assistance à distance 150 effectue une surveillance d'activation d'assistance au sol. En d'autres termes, le premier équipement d'assistance à distance 150 surveille une éventuelle présence de signal d'activation d'assistance à distance sur l'interface d'entrée 204.

Dans une étape 702, le premier équipement d'assistance à distance 150 vérifie si un ordre d'activation est reçu, par détection d'une éventuelle apparition du signal d'activation d'assistance à distance. En cas de vérification positive, une étape 703 est effectuée ; sinon, l'étape 701 est répétée.

Dans l'étape 703, le premier équipement d'assistance à distance 150 établit la communication 111 (si celle-ci n'est pas déjà en place).

Dans une étape 704, le premier équipement d'assistance à distance 150 active les premier et second mixeurs susmentionnés.

Dans une étape 705, le premier équipement d'assistance à distance 150 active le relais de commandes susceptibles d'être reçues via la communication 111.

Dans une étape 706 optionnelle, le premier équipement d'assistance à distance 150 active le relais de données et de messages, tel que déjà décrit.

Dans une étape 707, le premier équipement d'assistance à distance 150 effectue une surveillance de désactivation d'assistance au sol. En d'autres termes, le premier équipement d'assistance à distance 150 surveille une éventuelle disparition du signal d'activation d'assistance à distance sur l'interface d'entrée 204.

Dans une étape 708, le premier équipement d'assistance à distance 150 vérifie si un ordre de désactivation est reçu, par détection d'une éventuelle disparition du signal d'activation d'assistance à distance. En cas de vérification positive, une étape 709 est effectuée ; sinon, l'étape 707 est répétée.

Dans une étape 709 optionnelle, le premier équipement d'assistance à distance 150 désactive le relais de données et de messages. C'est l'opération inverse de l'étape 706.

Dans une étape 710, le premier équipement d'assistance à distance 150 désactive le relais de commandes. C'est l'opération inverse de l'étape 705.

Dans une étape 711, le premier équipement d'assistance à distance 150 désactive les premier et second mixeurs susmentionnés, un relais entre les interfaces d'entrée-sortie 201 et 211 étant toutefois assuré pour permettre au pilote de l'aéronef 100 et au centre de contrôle de trafic aérien ATC 142 de converser. C'est l'opération inverse de l'étape 705.

Dans l'étape 712, le premier équipement d'assistance à distance 150 libère la communication 111. Le premier équipement d'assistance à distance 150 peut en variante laisser la communication 111 en place, par exemple pour permettre à l'opérateur posté dans le centre d'assistance à distance 141 de prendre contact avec le pilote de l'aéronef 100. L'étape 701 est ensuite répétée.

Il peut être noté au vu de la description qui précède que le premier équipement d'assistance à distance 150 peut être aisément inséré dans l'architecture actuelle de communication des aéronefs, sans modifier les opérations et protocoles de communication existants entre les aéronefs et les centres de contrôle de trafic aérien.

## Revendications

1. Equipement d'assistance à distance (150) destiné à être embarqué dans un aéronef (100) comprenant de moyens pour établir au moins une première communication (112, 121, 122) avec un centre de contrôle de trafic aérien (142), le cockpit de l'aéronef (100) étant équipé d'au moins un haut-parleur (152) et d'un microphone (151) destinés au pilote de l'aéronef (100), ledit équipement (150) comporte :
- des moyens de communication pour établir (703) une seconde communication (111), avec un centre d'assistance à distance (141) ;
- des moyens de relais de commandes (507) pour effectuer un relais de commandes reçues par la seconde communication (111) vers des équipements de l'aéronef (100),
- une pluralité d'interfaces d'entrée-sortie parmi lesquelles une première interface d'entrée-sortie (211) configurée pour recevoir des signaux audio en provenance de la ou des premières communications (112), une deuxième interface d'entrée-sortie (201) configurée pour recevoir des signaux audio issus du microphone (151) et une troisième interface d'entrée-sortie (222) configurée pour recevoir des signaux audio en provenance de la seconde communication (111) ; **caractérisé en ce qu'**il comprend :
- des moyens de premier mixage (502) pour effectuer un premier mixage de signaux audio en provenance de la ou des premières communications (112, 121, 122) et de signaux audio en provenance de la seconde communication (111), le résultat du premier mixage de signaux audio étant transmis par la deuxième interface d'entrée-sortie vers le au moins un haut-parleur (152);
- des moyens de second mixage (502) pour effectuer un second mixage de signaux audio en provenance de la ou des premières communications (112, 121, 122) et de signaux audio en provenance du microphone (151), le résultat du second mixage de signaux audio étant transmis par la troisième interface d'entrée-sortie (222)vers la seconde communication (111) ;
- une interface (204) pour recevoir un signal d'activation d'assistance à distance, et :
∘ en présence du signal d'activation d'assistance à distance, des moyens d'activation pour activer au moins les premier et second mixages et le relais de commandes ; et
∘ en l'absence du signal d'activation d'assistance à distance, des moyens de propagation pour transmettre les signaux audio en provenance de la ou des premières communications (112, 121, 122) vers le au moins un haut-parleur (152) et pour transmettre les signaux audio en provenance du microphone (151) vers la ou les premières communications (112, 121, 122).

2. Equipement (150) selon la revendication 1, dans lequel les commandes sont au moins parmi la liste de commandes suivante :
- ajuster le niveau sonore des signaux audio reçus en provenance du centre de contrôle du trafic aérien (142) ;
- paramétrer des équipements du cockpit pour établir une ou plusieurs communications avec le centre de contrôle du trafic aérien (142) ;
- paramétrer des équipements du cockpit pour sélectionner en émission et/ou en réception une ou plusieurs communications (112, 121, 122) parmi une pluralité de communications (112, 121, 122) établies avec le centre de contrôle du trafic aérien (142) ; et
- accepter un appel reçu via une communication (112, 121, 122) établie avec le centre de contrôle du trafic aérien (142).

3. Equipement (150) selon la revendication 2, dans lequel la liste de commandes comporte en outre :
- commander l'ouverture et la fermeture de la porte entre le cockpit et la cabine de l'aéronef (100).

4. Equipement (150) selon l'une quelconque des revendications 1 à 3, comportant en outre des moyens de relais d'informations pour relayer vers la seconde communication des informations d'état et de configuration d'équipements de l'aéronef (100) et/ou des messages textuels échangés entre le cockpit et le centre de contrôle du trafic aérien (142).

5. Equipement (150) selon l'une quelconque des revendications 1 à 4, dans lequel la seconde communication (111) est une communication par satellite.

6. Système comportant un premier équipement d'assistance à distance (150) selon l'une quelconque des revendications 1 à 5, ainsi qu'un second équipement d'assistance à distance (160) installé dans le centre d'assistance à distance (141), les premier (150) et second (160) équipements d'assistance à distance coopérant via la seconde communication (111) afin de permettre à un opérateur posté dans le centre d'assistance à distance (141) de commander à distance des équipements de l'aéronef (100), de communiquer vocalement avec le cockpit de l'aéronef (100) et de recevoir des échanges vocaux entre le cockpit de l'aéronef (100) et le centre de contrôle du trafic aérien (142).

7. Aéronef (100) disposant de moyens pour établir au moins une première communication (112, 121, 122) avec un centre de contrôle de trafic aérien (142), le cockpit de l'aéronef (100) étant équipé d'au moins un haut-parleur (152) et d'un microphone (151) destinés au pilote de l'aéronef (100), l'aéronef (100) comportant en outre un équipement d'assistance à distance (150) selon l'une quelconque des revendications 1 à 5.

8. Procédé implémenté par un équipement d'assistance à distance (150) embarqué dans un aéronef (100) disposant de moyens pour établir au moins une première communication (112, 121, 122) avec un centre de contrôle de trafic aérien (142), le cockpit de l'aéronef (100) étant équipé d'au moins un haut-parleur (152) et d'un microphone (151) destinés au pilote de l'aéronef (100), le procédé comporte les étapes suivantes :
- établir (701) une seconde communication, avec un centre d'assistance à distance (141) ;
- détecter (702) la présence d'un signal d'activation d'assistance à distance ; si la présence d'un signal d'activation d'assistance à distance est détectée :
- effectuer un premier mixage de signaux audio en provenance de la ou des premières communications (112, 121, 122) et de signaux audio en provenance de la seconde communication (111), et transmettre le résultat du premier mixage vers le au moins un haut-parleur (152) ;
- effectuer un second mixage de signaux audio en provenance de la ou des premières communications (112, 121, 122) et de signaux audio en provenance du microphone (151), et transmettre le résultat du second mixage vers la seconde communication (111) ; et
- relayer des commandes reçues par la seconde communication (111) vers des équipements de l'aéronef (100).
sinon, et jusqu'à ce qu'un signal d'assistance à distance soit détecté :
- transmettre les signaux audio en provenance de la ou des premières communications (112, 121, 122) vers le au moins un haut-parleur (152) ;
- transmettre les signaux audio en provenance du microphone (151) vers la ou les premières communications (112, 121, 122).

## Patentansprüche

1. Fernassistenzausrüstung (150) für die Integration in ein Luftfahrzeug (100), beinhaltend Mittel zum Herstellen mindestens einer ersten Kommunikation (112, 121, 122) mit einem Flugverkehrskontrollzentrum (142), wobei das Cockpit des Luftfahrzeugs (100) mit mindestens einem Lautsprecher (152) und einem Mikrofon (151) für den Piloten des Luftfahrzeugs (100) ausgerüstet ist, wobei die Ausrüstung (150) Folgendes umfasst:
- Kommunikationsmittel zum Herstellen (703) einer zweiten Kommunikation (111) mit einem Fernassistenzzentrum (141);
- Befehlsübermittlungsmittel (507) zum Durchführen einer Übermittlung von Befehlen, die von der zweiten Kommunikation (111) empfangen werden, an Ausrüstungen des Luftfahrzeugs (100),
- eine Vielzahl von Eingangs-/Ausgangsschnittstellen, darunter eine erste Eingangs-/Ausgangsschnittstelle (211), die dazu konfiguriert ist, Audiosignale von der oder den ersten Kommunikationen (112) zu empfangen, eine zweite Eingangs-/Ausgangsschnittstelle (201), die dazu konfiguriert ist, Audiosignale von dem Mikrofon (151) zu empfangen, und eine dritte Eingangs-/Ausgangsschnittstelle (222), die dazu konfiguriert ist, Audiosignale von der zweiten Kommunikation (111) zu empfangen;
**dadurch gekennzeichnet, dass** sie Folgendes beinhaltet:
- Mittel für ein erstes Mischen (502), um ein erstes Mischen von Audiosignalen von der oder den ersten Kommunikationen (112, 121, 122) und von Audiosignalen von der zweiten Kommunikation (111) durchzuführen, wobei das Ergebnis des ersten Mischens von Audiosignalen von der zweiten Eingangs-/Ausgangsschnittstelle an den mindestens einen Lautsprecher (152) übertragen wird;
- Mittel für ein zweites Mischen (502), um ein zweites Mischen von Audiosignalen von der oder den ersten Kommunikationen (112, 121, 122) und von Audiosignalen von dem Mikrofon (151) durchzuführen, wobei das Ergebnis des zweiten Mischens von Audiosignalen von der dritten Eingangs-/Ausgangsschnittstelle (222) an die zweite Kommunikation (111) übertragen wird;
- eine Schnittstelle (204) zum Empfangen eines Fernassistenzaktivierungssignals, und:
o bei Vorhandensein des Fernassistenzaktivierungssignals, Aktivierungsmittel zum Aktivieren mindestens des ersten und des zweiten Mischens und der Übermittlung von Befehlen; und
o bei Nichtvorhandensein des Fernassistenzaktivierungssignals, Verteilungsmittel zum Übertragen der Audiosignale von der oder den ersten Kommunikationen (112, 121, 122) an den mindestens einen Lautsprecher (152) und zum Übertragen der Audiosignale von dem Mikrofon (151) an die erste(n) Kommunikation(en) (112, 121, 122).

2. Ausrüstung (150) nach Anspruch 1, wobei die Befehle mindestens in der folgenden Liste von Befehlen enthalten sind:
- Einstellen des Schallpegels der von dem Flugverkehrskontrollzentrum (142) empfangenen Audiosignale;
- Parametrieren von Ausrüstungen des Cockpits, um eine oder mehrere Kommunikationen mit dem Flugverkehrskontrollzentrum (142) herzustellen;
- Parametrieren von Ausrüstungen des Cockpits, um eine oder mehrere Kommunikationen (112, 121, 122) aus einer Vielzahl von mit dem Flugverkehrskontrollzentrum (142) hergestellten Kommunikationen (112, 121, 122) für das Versenden und/oder das Empfangen auszuwählen; und
- Annehmen eines Anrufs, der über eine mit dem Flugverkehrskontrollzentrum (142) hergestellte Kommunikation (112, 121, 122) empfangen wird.

3. Ausrüstung (150) nach Anspruch 2, wobei die Liste von Befehlen ferner Folgendes umfasst:
- Steuern des Öffnens und des Schließens der Tür zwischen dem Cockpit und der Kabine des Luftfahrzeugs (100) .

4. Ausrüstung (150) nach einem der Ansprüche 1 bis 3, die ferner Informationsübermittlungsmittel umfasst, um Informationen über den Zustand und die Konfiguration von Ausrüstungen des Luftfahrzeugs (100) und/oder zwischen dem Cockpit und dem Flugverkehrskontrollzentrum (142) ausgetauschte Textnachrichten an die zweite Kommunikation zu übermitteln.

5. Ausrüstung (150) nach einem der Ansprüche 1 bis 4, wobei die zweite Kommunikation (111) eine Satellitenkommunikation ist.

6. System, das eine erste Fernassistenzausrüstung (150) nach einem der Ansprüche 1 bis 5 sowie eine zweite, in dem Fernassistenzzentrum (141) installierte Fernassistenzausrüstung (160) umfasst, wobei die erste (150) und die zweite (160) Fernassistenzausrüstung über die zweite Kommunikation (111) zusammenarbeiten, um es einem in dem Fernassistenzzentrum (141) postierten Bediener zu gestatten, Ausrüstungen des Luftfahrzeugs (100) fernzusteuern, mit dem Cockpit des Luftfahrzeugs (100) verbal zu kommunizieren und verbale Austausche zwischen dem Cockpit des Luftfahrzeugs (100) und dem Flugverkehrskontrollzentrum (142) zu empfangen.

7. Luftfahrzeug (100), das über Mittel verfügt, um mindestens eine erste Kommunikation (112, 121, 122) mit einem Flugverkehrskontrollzentrum (142) herzustellen, wobei das Cockpit des Luftfahrzeugs (100) mit mindestens einem Lautsprecher (152) und einem Mikrofon (151) für den Piloten des Luftfahrzeugs (100) ausgerüstet ist, wobei das Luftfahrzeug (100) ferner eine Fernassistenzausrüstung (150) nach einem der Ansprüche 1 bis 5 umfasst.

8. Verfahren, das von einer in ein Luftfahrzeug (100) integrierten Fernassistenzausrüstung (150) implementiert wird, die über Mittel zum Herstellen mindestens einer ersten Kommunikation (112, 121, 122) mit einem Flugverkehrskontrollzentrum (142) verfügt, wobei das Cockpit des Luftfahrzeugs (100) mit mindestens einem Lautsprecher (152) und einem Mikrofon (151) für den Piloten des Luftfahrzeugs (100) ausgerüstet ist, wobei das Verfahren die folgenden Schritte umfasst:
- Herstellen (701) einer zweiten Kommunikation mit einem Fernassistenzzentrum (141);
- Erkennen (702) des Vorhandenseins eines Fernassistenzaktivierungssignals;
wenn das Vorhandensein eines Fernassistenzaktivierungssignals erkannt wird:
- Durchführen eines ersten Mischens von Audiosignalen von der oder den ersten Kommunikationen (112, 121, 122) und von Audiosignalen von der zweiten Kommunikation (111) und Übertragen des Ergebnisses des ersten Mischens an den mindestens einen Lautsprecher (152);
- Durchführen eines zweiten Mischens von Audiosignalen von der oder den ersten Kommunikationen (112, 121, 122) und von Audiosignalen von dem Mikrofon (151) und Übertragen des Ergebnisses des zweiten Mischens an die zweite Kommunikation (111); und
- Übermitteln von von der zweiten Kommunikation (111) empfangenen Befehlen an Ausrüstungen des Luftfahrzeugs (100);
andernfalls, und bis ein Fernassistenzaktivierungssignal erkannt wird:
- Übertragen der Audiosignale von der oder den ersten Kommunikationen (112, 121, 122) an den mindestens einen Lautsprecher (152);
- Übertragen der Audiosignale von dem Mikrofon (151) an die erste(n) Kommunikation(en) (112, 121, 122).

## Claims

1. Remote assistance device (150) intended to be embedded in an aircraft (100) comprising means for establishing at least one first communication (112, 121, 122) with an air traffic control centre (142), the cockpit of the aircraft (100) being equipped with at least one loudspeaker (152) and one microphone (151) intended for the pilot of the aircraft (100), said device (150) comprises:
- communication means for establishing (703) a second communication (111), with a remote assistance centre (141) ;
- command relaying means (507) for performing a relaying of commands received via the second communication (111) to devices of the aircraft (100),
- a plurality of input-output interfaces including a first input-output interface (211) configured to receive audio signals originating from the first communication or communications (112), a second input-output interface (201) configured to receive audio signals from the microphone (151) and a third input-output interface (222) configured to receive audio signals originating from the second communication (111);
**characterized in that** it comprises:
- first mixing means (502) for performing a first mixing of audio signals originating from the first communication or communications (112, 121, 122) and of audio signals originating from the second communication (111), the result of the first mixing of audio signals being transmitted by the second input-output interface to the at least one loudspeaker (152);
- second mixing means (502) for performing a second mixing of audio signals originating from the first communication or communications (112, 121, 122) and of audio signals originating from the microphone (151), the result of the second mixing of audio signals being transmitted by the third input-output interface (222) to the second communication (111);
- an interface (204) for receiving a remote assistance activation signal, and:
∘ in the presence of the remote assistance activation signal, activation means for activating at least the first and second mixings and the relaying of commands; and
∘ in the absence of the remote assistance activation signal, propagation means for transmitting the audio signals originating from the first communication or communications (112, 121, 122) to the at least one loudspeaker (152) and for transmitting the audio signals originating from the microphone (151) to the first communication or communications (112, 121, 122) .

2. Device (150) according to Claim 1, in which the commands are at least from the following list of commands:
- adjust the sound level of the audio signals received from the air traffic control centre (142);
- parameterize devices of the cockpit to establish one or more communications with the air traffic control centre (142);
- parameterize devices of the cockpit to select in transmission and/or in reception one or more communications (112, 121, 122) from a plurality of communications (112, 121, 122) established with the air traffic control centre (142); and
- accept a call received via a communication (112, 121, 122) established with the air traffic control centre (142).

3. Device (150) according to Claim 2, in which the list of commands also comprises:
- command the opening and the closing of the door between the cockpit and the cabin of the aircraft (100) .

4. Device (150) according to any one of Claims 1 to 3, also comprising information relaying means for relaying to the second communication information on the status and configuration of devices of the aircraft (100) and/or text messages exchanged between the cockpit and the air traffic control centre (142).

5. Device (150) according to any one of Claims 1 to 4, in which the second communication (111) is a satellite communication.

6. System comprising a first remote assistance device (150) according to any one of Claims 1 to 5, and a second remote assistance device (160) installed in the remote assistance centre (141), the first (150) and second (160) remote assistance devices cooperating via the second communication (111) in order to allow an operator posted in the remote assistance centre (141) to remotely control devices of the aircraft (100), to communicate by voice with the cockpit of the aircraft (100) and to receive voice exchanges between the cockpit of the aircraft (100) and the air traffic control centre (142).

7. Aircraft (100) having means for establishing at least one first communication (112, 121, 122) with an air traffic control centre (142), the cockpit of the aircraft (100) being equipped with at least one loudspeaker (152) and one microphone (151) intended for the pilot of the aircraft (100), the aircraft (100) also comprising a remote assistance device (150) according to any one of Claims 1 to 5.

8. Method implemented by a remote assistance device (150) embedded in an aircraft (100) having means for establishing at least one first communication (112, 121, 122) with an air traffic control centre (142), the cockpit of the aircraft (100) being equipped with at least one loudspeaker (152) and one microphone (151) intended for the pilot of the aircraft (100), the method comprises the following steps:
- establishing (701) a second communication, with a remote assistance centre (141);
- detecting (702) the presence of a remote assistance activation signal;
if the presence of a remote assistance activation signal is detected:
- performing a first mixing of audio signals originating from the first communication or communications (112, 121, 122) and of audio signals originating from the second communication (111), and transmitting the result of the first mixing to the at least one loudspeaker (152);
- performing a second mixing of audio signals originating from the first communication or communications (112, 121, 122) and of audio signals originating from the microphone (151), and transmitting the result of the second mixing to the second communication (111); and
- relaying commands received via the second communication (111) to devices of the aircraft (100),
otherwise, and until a remote assistance signal is detected:
- transmitting the audio signals originating from the first communication or communications (112, 121, 122) to the at least one loudspeaker (152);
- transmitting the audio signals originating from the microphone (151) to the first communication or communications (112, 121, 122).
